**Europäisches Patentamt**

**European Patent Office**

**Office européen des brevets**

(19)

(11) Veröffentlichungsnummer: **0 093 326**
**B1**

(12) **EUROPÄISCHE PATENTSCHRIFT**

(45) Veröffentlichungstag der Patentschrift:
**28.10.87**

(51) Int. Cl.⁴: **A 22 C 13/02**

(21) Anmeldenummer: **83103851.8**

(22) Anmeldetag: **20.04.83**

(54) Geraffte Wursthülle und Verfahren zu ihrer Herstellung.

(30) Priorität: **03.05.82 DE 3216437**

(43) Veröffentlichungstag der Anmeldung:
**09.11.83 Patentblatt 83/45**

(45) Bekanntmachung des Hinweises auf die Patenterteilung:
**28.10.87 Patentblatt 87/44**

(84) Benannte Vertragsstaaten:
**AT BE CH DE FR GB IT LI LU NL SE**

(56) Entgegenhaltungen:
**EP - A - 0 037 543**
**EP - A - 0 054 162**
**EP - A - 0 100 495**
**DE - B - 1 288 994**
**FR - A - 2 218 997**
**US - A - 3 619 854**
**US - A - 4 185 358**

(73) Patentinhaber: **HOECHST AKTIENGESELLSCHAFT,
Postfach 80 03 20, D-6230 Frankfurt am Main 80 (DE)**

(72) Erfinder: **Andrä, Klaus, Dr.,
Konrad-Adenauer-Strasse 10, D-6501 Zornheim (DE)**
Erfinder: **Hutschenreuter, Elfriede, Haardtstrasse 116,
D-6208 Bad-Schwalbach (DE)**
Erfinder: **Besler, Horst-Erich, Jägerstrasse 17,
D-6204 Taunusstein 1 (DE)**

**Beschreibung**

Die Erfindung bezieht sich auf eine geraffte Wursthülle von der im Oberbegriff des Anspruchs 1 genannten Art und auf ein Verfahren zu ihrer Herstellung.

Eine geraffte Wursthülle dieser Art ist aus der EP-A-0 037 543 bekannt. Dort wird die Lehre gegeben, die aus der US-A-3 988 804 bzw. US-A-4 185 358 bekannte Vorrichtung zum Raffen von Wursthüllen, die eine Verdickung in Form einer Klebenaht aufweisen, in der Weise zu verwenden, dass sich die Hülle während des Raffens mit dieser speziellen Raffvorrichtung selbständig verdrehen kann. Auf diese Weise soll bei einer Hülle mit einer Klebenaht die Nahtzone spiralig um die Längsachse der gerafften Schlauchhülle angeordnet werden. Die Anzahl der spiralförmigen Windungen der Nahtzone pro 10 m Hüllenlänge ist jedoch weit geringer als 10 und damit für ein hohes Raffverhältnis nicht befriedigend. Ausserdem kann auf diese Weise keine reproduzierbare Steigung der gewendelten Nahtzone erreicht werden, zudem zeigt der Hohlkanal der Raupe keinen kreisförmigen Querschnitt, da die relativ dicke Nahtzone beim Raffen zumindest teilweise in den Hohlkanal hineinverlagert wird.

Es wurde ferner z.B. in der älteren europäischen Patentanmeldung 81 109 120.6, veröffentlicht am 23.6.82 als EP-A-0 054 162, vorgeschlagen, eine Wursthülle mit einer Klebenaht während des Raffvorgangs spiralförmig zu verdrehen, indem man eine Raffvorrichtung entsprechend den US-A-2 819 488, US-A-3 619 854, US-A-3 594 857 oder US-A-3 766 603 verwendet. Die Anzahl der Windungen pro 10 m Schlauchlänge soll dann zwischen 0,5 und 10 betragen. Eine höhere Anzahl von Windungen pro 10 m Schlauchlänge lässt sich durch eine spiralige Verdrehung des Schlauches während des Raffens nicht erzielen. Ausserdem zeigt eine Drehbewegung der Raupe gegenüber dem Dorn der Raffvorrichtung durch äussere oder innere tangential angreifende Kräfte den Nachteil, dass wegen dieser auf der Schlauchhülle angreifenden Deformationskräfte die Beschädigungsgefahr relativ gross ist und eine komplizierte Rafftechnik erforderlich ist.

Ausgehend von dem aus der EP-A-0 037 543 bekannten Stand der Technik besteht die Aufgabe der vorliegenden Erfindung darin, eine geraffte Wursthülle von der dort beschriebenen Art aufzuzeigen, die eine wesentlich höhere Verdichtung der Nahtzone aufweist und trotzdem einen gleichmässigen, im Querschnitt kreisförmigen, geraden inneren Hohlraum mit relativ glatter Innenwandung aufweist, der ein problemloses Aufbringen der gerafften Wursthülle auf das Füllrohr einer Füllvorrichtung gestattet, und zwar auch bei Füllrohren mit relativ grossem Durchmesser, welche ein schnelles und damit wirtschaftliches Abfüllen von Wurstmasse in die geraffte Wursthülle ermöglichen. Eine weitere Aufgabe der Erfindung besteht darin, ein Verfahren zur Herstellung einer solchen gerafften Wursthülle anzugeben.

Diese Aufgabe wird gelöst mit der im Anspruch 1 genannten gerafften Wursthülle sowie durch das Verfahren mit den im Anspruch 9 beschriebenen Merkmalen. Die Unteransprüche geben weitere Ausführungsformen der Wursthülle bzw. des Verfahrens an.

Diese geraffte Wursthülle zeigt den Vorteil, dass sie trotz ihrer relativ dicken Klebenaht eine relativ hohe Verdichtung zeigt und gleichzeitig einen im wesentlichen gleichmässigen äusseren Umfang sowie gleichmässigen kreisförmigen Innenumfang aufweist. Der Hohlkanal der Raupe ist geradlinig und zeigt eine im wesentlichen glatte Innenwand, trotz der Verdickung der Hülle im Bereich der Klebenaht. Das Verfahren ist besonders einfach durchzuführen, ohne dass in der Raffvorrichtung irgendwelche apparative Veränderungen erforderlich sind. Überraschenderweise lässt sich mit diesem Verfahren die relativ dickwandige Nahtzone auf die Aussenseite der gerafften Schlauchhülle verlagern, so dass die geraffte Hülle problemlos auf Füllrohre mit relativ grossem Durchmesser aufgeschoben werden kann und beim Füllvorgang gleichmässig unter Entraffen vom Füllrohr abläuft.

Die Bildung einer Schlauchhülle mit einer Naht oder mehreren längsaxial sich erstreckenden Nähten durch Verklebung der Randbereiche der längsaxial sich erstreckenden Randzonen ist an sich bekannt, wozu beispielsweise auf die eingangs zitierte EP-A-0 037 543 verwiesen wird.

Entsprechend der vorliegenden Erfindung wird ein um seine Längsachse gebogener, blatt- oder bahnförmiger rechteckiger Folienzuschnitt oder eine entsprechend gebogene z.B. endlose Folienbahn vorzugsweise aus Cellulose, gegebenenfalls mit einem Verankerungsmittel für den Klebstoff auf ihrer Oberfläche, durch Überlappung und Verklebung der längsaxial sich erstreckenden Randbereiche mit einer Klebstoff enthaltenden Lösung oder Dispersion in eine Schlauchhülle mit einer längsaxial sich erstreckenden Verbindungsnaht übergeführt. Der Einfachheit halber wird im folgenden anstelle von «blatt- oder bahnförmigen Zuschnitten» und «endlosen Bahnen» nur von Bahnen gesprochen. Die Klebstoff enthaltende Schicht im Überlappungsbereich wird in Form einer Lösung oder Dispersion auf die Folienbahn oder gegebenenfalls auf die Verankerungsschicht aufgebracht. Es ist auch möglich, die Randzonen in der Weise miteinander zu verbinden, dass die Ränder bündig, d.h. mit den Kanten zumindest im wesentlichen aneinanderstossend einander genähert werden und dann mit einem Band, Film- bzw. Folienstreifen, im folgenden als Folienstreifen bezeichnet, der beide Randzonen überdeckt, miteinander verbunden werden. Der Folienstreifen befindet sich dann auf der Aussenseite oder Innenseite der Schlauchhülle, oder es werden parallel zueinander verlaufende Folienstreifen verwendet, von denen sich dann einer auf der Innenseite und einer auf der Aussenseite der Schlauchhülle befindet. Ein oder mehrere Folienstreifen können auch verwendet werden, wenn die Randzonen sich überlappen. Die Klebstoffschicht wird in Form einer Lösung oder Dispersion unmittelbar vor der Herstellung der Verbindungsnaht auf die Randzonen der Bahn, und/oder gegebenenfalls auf die Oberflächen des Folienstreifens aufgebracht, z.B. mit einer Düse oder einer Antragswalze.

Der Folienstreifen hat zweckmässigerweise eine Breite von 5 bis 15% des Schlauchumfangs und besteht vorzugsweise aus dem gleichen Material wie die Schlauchhülle, insbesondere aus rauchdurchlässiger, gegebenenfalls faserverstärkter Cellulose, wobei dessen Festigkeitswerte in Längs- und Querrichtung im gleichen Bereich wie bei der Folienbahn liegen. Sofern jedoch auf die krümmungsfreie Form der Schlauchhülle kein besonderer Wert gelegt wird, ist es auch möglich, einen Folienstreifen aus Papier oder Kunststoff, einen Folienverbund, einen Vliesstoff, eine Schaumfolie oder mikroporöse Folie bzw. Membran zu verwenden. Ebenso sind Bänder aus Gewebe, Netzwerk oder Gitter als Folienstreifen zur Verbindung der Randzonen geeignet.

Vorzugsweise werden jedoch kompakte Folienstreifen insbesondere aus rauchdurchlässigem Material, insbesondere der oben genannte Folienstreifen aus Cellulose, gegebenenfalls mit Faserverstärkung, verwendet. Der Folienstreifen lässt sich auch als Aufreissband für den mit Füllgut gefüllten Schlauch, insbesondere für Wursthüllen, die vom Inhalt ohne grossen Aufwand abgezogen werden sollen, verwenden.

Die Formung der Bahn zu einem Schlauch erfolgt beispielsweise entweder auf einer genügend langen Wegstrecke oder durch Umlenkung über ein schulterartiges Formwerkzeug, wie es in der EP-A-0 037 543 beschrieben wird.

Als Basismaterial für die Herstellung der Schlauchhülle dienen vorzugsweise Bahnen aus Cellulose, d.h. aus Zellglas, regenerierter Cellulose oder Cellulosehydrat, die gegebenenfalls mit einer Fasereinlage verstärkt sind, wie sie zur Verpackung von Lebensmitteln, insbesondere als Wursthüllenmaterial, üblich sind. So können Cellulosebahnen, die nach dem Viskoseverfahren (US-A-3 884 270), durch Denitrierung von Cellulosenitrat oder Hydrolyse anderer Celluloseester, z.B. Deacetylierung von Celluloseacetat mit wässriger oder alkoholischer Alkalilösung (US-A-3 546 209) hergestellt wurden, eingesetzt werden. Der Einfachheit halber wird nur von Cellulosebahnen gesprochen. Die Herstellung der gegebenenfalls faserverstärkten Cellulosebahn und die Herstellung einer Beschichtung aus Verankerungsmittel erfolgt insbesondere nach dem in der EP-A-0 037 543 beschriebenen Verfahren.

Unter Verankerungsmittel bzw. Haftvermittler in bezug auf Klebstoffe sind bekanntlich Stoffe oder Stoffgemische zu verstehen, die vor dem Klebstoffauftrag auf eine oder beide Klebflächen aufgebracht werden, um die Haftung zwischen Klebstoff und Klebflächen zu verbessern. Im vorliegenden Fall soll der Haftvermittler die Klebstoffschicht auf der Bahn und/oder Folienstreifen nassfest verankern. Das Verankerungsmittel befindet sich zwischen der Klebstoffschicht und der Bahnoberfläche bzw. zwischen der Klebstoffschicht und der Oberfläche des Folienstreifens und ist vorzugsweise ein wasserunlösliches gehärtetes kationisches Harz. Polyurethanharze, Nitrocellulose und andere als wasserunlösliche Verankerungsmittel bekannte Verbindungen können ebenfalls eingesetzt werden. Diese haftvermittelnden Harze und ihr Auftrag auf die Folienbahn sind in der EP-A-0 037 543 ausführlich beschrieben.

Zusätzlich kann die Bahn auf der die spätere Innenseite der Schlauchhülle bildenden Oberfläche ein übliches Mittel zur Verbesserung der Schälbarkeit der Schlauchhülle aufweisen.

Die Bahn oder der Folienstreifen kann vor dem Verkleben mit Beschriftungen oder dekorativen Mustern bedruckt werden, wobei neben dem bei der Herstellung von nahtlosen Wursthüllen üblichen Druckverfahren noch weitere Druckmöglichkeiten sich anbieten, da im vorliegenden Fall nicht der Schlauch, sondern die flache Bahn vor der Schlauchformung bedruckt werden kann.

Der nach der Erfindung besonders bevorzugte Klebstoff ist ein kationisches Harz, das zunächst in wasserlöslicher Form in einer Lösung oder Dispersion, zweckmässigerweise in einer Nassschichtdicke im Bereich von etwa 5 bis 20 µm auf die miteinander zu verbindenden Randzonen der Cellulosebahn unmittelbar vor oder während der Schlauchformung aufgebracht wird. Wird ein Folienstreifen zur Verbindung der Randzonen der Cellulosebahn verwendet, so wird die Lösung oder Dispersion auf den Folienstreifen und/oder auf die Randzonen der Cellulosebahn aufgebracht. Der Klebstoffauftrag auf den Folienstreifen erfolgt beidseitig, wenn der Folienstreifen in der Überlappung zwischen den Randzonen der Cellulosebahn angeordnet wird.

Es wird ein organisches Lösungs- bzw. Dispersionsmittel oder ein Gemisch für den Klebstoff verwendet, vorzugsweise wird der Klebstoff in 5 bis 20 gew.-%iger, insbesondere 10 bis 15 gew.-%iger wässriger Lösung aufgebracht. Der Einfachheit halber wird im folgenden nur der Ausdruck «Klebstofflösung» gebraucht.

Als Beispiele für das den Klebstoff bildende kationische Harz, das in Lösung noch härtbar ist und während der Lagerung bei Raumtemperatur, gegebenenfalls mit Hilfe eines Katalysators, in seine wasserunlösliche, gehärtete Form übergeht, sind zu nennen Harnstoff-Formaldehyd-, Melamin-Formaldehyd- und Phenol-Formaldehyd-Harze.

In bevorzugter Ausführung erfolgt die Härtung der Harze im alkalischen Bereich, z.B. durch Zusatz von konzentrierter Ammoniaklösung, und bei Raumtemperatur. Weitere als Klebstoff geeignete kationische Harze sind in der US-PS 3 378 379 beschrieben.

Besonders bevorzugte Klebstoffe sind Kondensationsprodukte von aliphatischen Polyaminen oder von Polyamiden, insbesondere von Polyamidpolyamin mit bifunktionellen Halohydrinen oder deren Derivaten wie z.B. Epichlorhydrin, wie sie beispielsweise auch in den US-A-2 926 154 und US-A-2 573 956 oder in den GB-A-865 727 und G-B-A-908 205 beschrieben sind. Ein besonders geeignetes Harz ist das Reaktionsprodukt aus aliphatischem 2,6-Polyamid, Diethylentriamin und Epichlorhydrin.

Die Gesamtbreite des Auftrags der Klebstofflösung hängt ab von den gewünschten Festigkeitswerten und Schlauchhüllenumfang sowie von der Nassschichtdicke der aufgebrachten Klebstofflösung. Gewöhnlich wird die Gesamtbreite des Klebstoffauftrags zwischen etwa 1 bis 15, insbesondere 2 bis 3 mm liegen und beträgt nur wenige Prozent des späteren Schlauchhüllenumfangs. Bei Verwendung eines Folienstreifens zur überlappenden Verbindung einer aus den Randzonen gebildeten Stossnaht ist ein entsprechend doppelt so breiter Auftrag der Klebstofflösung erforderlich.

Es ist selbstverständlich, dass der Auftrag der Klebstofflösung nur im gewünschten Verklebungsbereich, d.h. entlang der beiden längsaxial sich erstreckenden Ränder und/oder auf der Oberfläche des Folienstreifens, erfolgt.

Die mit der Klebstofflösung zu versehende Oberfläche der Cellulosebahn befindet sich beim Auftrag der Klebstofflösung im getrockneten oder im wieder angefeuchteten Zustand und weist gegebenenfalls bereits die oben beschriebene Schicht eines Verankerungsmittels auf.

Nach dem Auftrag der Klebstofflösung, z.B. mit Walzen oder Sprühdüsen, wird die Verbindungsnaht durch Überlappen der Randzonen der Cellulosebahn bzw. durch Überlappen des Folienstreifens mit den Randzonen der Cellulosebahn hergestellt. Das Lösungs- bzw. Dispersionsmittel kann durch vorsichtiges Erwärmen mit Heissluft oder Infrarotstrahlern entfernt werden; das Erwärmen wird jedoch zweckmässigerweise nicht angewendet, da es zu einer Versprödung des Cellulosematerials führen kann.

Vorzugsweise erfolgt die Entfernung des Lösungs- bzw. Dispersionsmittels und auch die Härtung des kationischen Harzes während der anschliessenden Lagerung bei Raumtemperatur über einen Zeitraum von etwa 1 bis 3 Tagen. Durch die während der Lagerung erfolgende Härtung des den Klebstoff bildenden Harzes verbinden sich die überlappenden Randzonen der Cellulosebahn miteinander bzw. der Folienstreifen mit den Randzonen. Eine Schichtdicke für den Klebstoff entsprechend einem Flächengewicht im Bereich von 0,5 bis 10 g/m$^2$ ist im allgemeinen ausreichend. Die übliche Dicke der Klebstoffschicht entspricht einem Flächengewicht von etwa 1 bis 3 g/m$^2$ bei einer Gesamtbreite der Klebstoffschicht von etwa 1 bis 15 mm. Nach der Lagerung hat die Schlauchhülle einen Feuchtigkeitsgehalt von 4 bis 15, insbesondere 7 bis 10 Gew.-%.

Die Klebstoffschicht und/oder die Verankerungsmittelschicht können noch weitere Zusätze enthalten, z.B. Mittel, um diese Schicht oder die Schlauchhülle vor dem Befall durch Mikroorganismen zu schützen, Netzmittel, Weichmacher, Füllstoffe wie Kaolin, Glaskugeln, Kreide, Quarzmehl, Mikrodolomit, Schwerspat, feinkörnigen Sand, Zinkoxid und Pigmente sowie organische und anorganische Farbstoffe z.B. in Pulver- oder Schuppenform, die die Verdrillung der Hülle beim Aufwickeln und bei der fertigen Raupe optisch erkennbar machen. Durch die farbliche Kennzeichnung der gewendelten Klebstoffschicht ist bei Verwendung der Wursthülle als Schäldarm eine einfache Kontrolle der Würste möglich, ob die Wursthülle vollständig von den Würsten abgeschält worden ist.

Wie sich zeigte, liegt die Reissfestigkeit von Klebestellen mit dem bevorzugten Verankerungsmittel und Klebstoff bei gleichen Werten oder sogar über den Werten für die Reissfestigkeit des Cellulosematerials. Wird ein Klebstoff analog EP-A-0 037 543 verwendet, ist eine Lagerung der Hülle vor dem Raffer nicht erforderlich.

Ein wesentliches Merkmal des Verfahrens besteht darin, dass man die Hülle vor dem Raffen helixförmig verdrillt. Das geschieht vorzugsweise dadurch, dass man die Hülle verdrillt und in verdrilltem Zustand auf eine Rolle aufwickelt, von der dann die verdrillte Hülle der Raffvorrichtung zugeführt wird. Es ist besonders vorteilhaft, wenn man die Hülle bereits bei ihrer Herstellung sofort nach Bildung ihrer Naht verdrillt und unter Flachlegen verdrillt aufrollt. Im letzteren Fall wird die durch die Verklebung der Randzonen der endlosen Bahn gebildete Klebenaht unmittelbar nach Bildung der schlauchförmigen Hülle verdrillt, die verdrillte Hülle flachgelegt und aufgewickelt.

Eine geeignete Vorrichtung besteht beispielsweise aus einem ersten Zugwalzenpaar, welches den geklebten Schlauch von der Klebestation abzieht, und einem zweiten Zugwalzenpaar, welches um die Längsachse der Hülle rotiert und dabei die Hülle im Auslauf aus diesem zweiten Zugwalzenpaar verdrillt. Zwischen den beiden Zugwalzenpaaren wird der Schlauch mit einem Stützgas in aufgeblasenem Zustand gehalten.

In dem von dem zweiten Zugwalzenpaar gebildeten Spalt wird die Hülle gleichzeitig flachgelegt. Zur Vermeidung von Faltenbildung bei Hüllen mit relativ grossem Durchmesser, z.B. von 120 mm, können beim Einlaufen der Hülle in diesen Spalt vor dem zweiten Zugwalzenpaar Elemente angebracht werden, welche die Hülle stetig zunehmend abflachen und allmählich in den flachgelegten Zustand überführen. Geeignete Elemente sind beispielsweise Leitbleche, Rollenbahnen, Förderbänder oder Leitwalzen, die konvergierend zueinander verlaufen, wie sie beispielsweise bei der Herstellung von extrudierten Kunststoffschläuchen üblich sind.

Alle Vorrichtungsteile zum Verdrillen, Flachlegen und Aufwickeln drehen sich mit gleicher Geschwindigkeit um die Längsachse der Hülle. Diese Teile sind deshalb zweckmässigerweise auf einem gemeinsamen, rotierenden Gestell untergebracht und können auch Teil der Schlauchformanlage sein.

Das Ausmass der Verdrillung des Schlauches und der Klebenaht wird durch die Drehgeschwindigkeit dieser Vorrichtungsteile bzw. des Gestells und durch die Schlauchgeschwindigkeit bestimmt.

Wird die Hülle beispielsweise mit einer Geschwindigkeit von 5 m/min vorwärtsbewegt bzw. mit dieser Geschwindigkeit aus einer Bahn gebildet und beträgt die Drehzahl der die Hülle verdrillenden Elemente 5 Umdrehungen/min, so erhält die Hülle 10 Windungen je 10 m Hüllenlänge und bei einer Geschwindigkeit der Hülle von 200 m/min und einer Drehzahl von 200 Umdrehungen/min liegt die Zahl der Windungen je 10 m Hüllenlänge ebenfalls bei 10. Bei einem Raffverhältnis von z.B. 100:1 (50:1) ist bei 10 Windungen/ 10 m Hüllenlänge der Wendelabstand 1 cm (2 cm) auf der Raupe. Eine optimale Raupe wird mit diesem Verfahren erreicht, wenn die Zahl der Windungen je 10 m Hüllenlänge grösser als 10 ist, d.h. wenn der Wendelabstand in der Raupe kleiner als 1 cm (Raffverhältnis 100:1) bzw. kleiner als 2 cm (Raffverhältnis 50:1) ist. Diese optimale Zahl der Windungen pro 10 m Hüllenlänge wird durch die gegenseitige Anpassung der Hüllengeschwindigkeit und Drehzahl erzielt, wobei der bevorzugte Bereich für die Hüllengeschwindigkeit bei 5 bis 200 m/min und für die Drehzahl bei 5 bis 200 Umdrehungen/min liegt. Die gegenseitige Anpassung der Hüllengeschwindigkeit und der Drehzahl wird durch den Quotienten aus Drehzahl (Umdrehungen/min) und Hüllengeschwindigkeit (m/min) festgelegt, der vorzugsweise grösser als 1 (Umdrehungen/m) ist und üblicherweise 4 (Umdrehungen/m) nicht übersteigt. Mit diesen Werten lassen sich optimale Raupen aus Hüllen mit einer Klebenaht herstellen.

Durch die Variation des Verhältnisses von Drehzahl und Hüllengeschwindigkeit lassen sich aber auch beliebig andere Steigungen der Naht bzw. eine beliebige andere Anzahl von Windungen der Hülle pro Längeneinheit erreichen. Ferner kann durch eine periodische Änderung der Drehzahl an der Wickelrolle eine periodisch sich ändernde Steigung der Nahtzone am Schlauch und somit auch in der Raupe erzeugt werden. Dies geschieht beispielsweise in der Weise, dass die relativ dicke Nahtzone der Hülle am Anfang und Ende der Raupe eine andere Steigung aufweist als in der Mitte der Raupe.

Das verschieden dicht geraffte Stück Wursthülle, das von der verschieden schnellen Drehung der Wursthülle beim Aufwickeln herrührt, ergibt eine erkennbare Markierung einer gewünschten vorgegebenen Länge an geraffter Wursthülle und gestattet das Abtrennen der gerafften Länge an der markierten Stelle während des Raffvorgangs. Das Raffen der Hülle erfolgt regelmässig. Nach Erreichen einer vorbestimmten Länge während des Raffens erhält die Wursthülle eine Markierung in Form einer abweichenden Steigung der gewendelten Nahtzone infolge der verschiedenen Drehzahl. Diese Markierung dient beispielsweise zur Kennzeichnung der Abtrennstelle, an welcher eine vorbestimmte Länge an geraffter Wursthülle abgetrennt wird.

Der Raffdorn ist ein hohles Rohr, welches den Schlauch stützt und der beim Raffen entstehenden Schlauchraupe einen bestimmten Innendurchmesser gibt. Ausserdem wird der Schlauch während des Raffens durch das Rohr hindurch leicht aufgeblasen, um ihm die für den Angriff der Raffkräfte erforderliche pralle Gestalt zu geben. Die Mittel zum Raffen des Schlauches sind die üblichen gezahnten Räder oder an umlaufenden Ketten befestigte Mitnehmer. Vorzugsweise ist das Rafforgan eine innen schraubenförmig verzahnte rotierende Hülse, welche auf das Schlauchmaterial eine axial verdichtende Kraft ausübt. Es ist auch möglich, die Raffkraft mit einem Luftstrahl aufzubringen.

In einer weiteren Ausführungsform erhält die Wursthülle eine zusätzliche Drehbewegung um den Raffdorn, wodurch die Raffalten zusätzlich zur vorhergehenden Verdrillung zu einem schraubenförmigen Muster gedreht werden. Diese Alternative ist jedoch nicht bevorzugt, da auf diese Weise eine wesentliche Verkürzung des Wendelabstandes nicht erreicht wird und ausserdem grosse Gefahr besteht, dass die Hülle durch die angreifenden Deformationskräfte beschädigt wird. Ferner ist die Steigung der gewendelten Nahtzone dann nicht mehr exakt reproduzierbar.

Sofern die Wursthülle z.B. für empfindliche Wurstmasse vorgesehen ist oder einen hohen Wassergehalt aufweist, so wird die Bahn, die Schlauchhülle oder die geraffte Wursthülle sterilisiert, wobei man übliche Methoden, wie z.B. Hitze- oder Ozonbehandlung oder Hochfrequenzbestrahlung, anwendet, oder mit einem chemischen Mittel versetzt, welches keimtötende Wirkung, insbesondere gegen Pilzbefall, zeigt.

Die Erfindung wird anhand der folgenden Beispiele näher erläutert.

Beispiel 1

Viskose wird durch einen Spalt in ein saures Koagulationsbad gepresst. Die nach dem Regenerieren erhaltene Bahn aus Cellulosehydrat-Gel wird durch eine Wanne geführt, die mit einer 0,3 gew.-%igen wässrigen Lösung eines wasserlöslichen kationischen Harzes gefüllt ist. Das Harz ist ein Reaktionsprodukt aus Ethylendiamin, Adipinsäure, Diethylentriamin und Epichlorhydrin und ist als 12 und 20 gew.-%ige wässrige Lösung unter dem Namen ® Resamin EW 601 (Hersteller Cassella) im Handel. Danach wird die Bahn aus Cellulosehydrat-Gel durch ein Weichmacherbad geführt, das aus einer 9 gew.-%igen wässrigen Glycerinlösung besteht.

Nach dem Trocknen bei 90 bis maximal 110 °C zeigt die erhaltene Bahn aus regenerierter Cellulose ein Flächengewicht von 50 g/m$^2$, einen Wassergehalt von ca. 8 Gew.-% und einen Glyceringehalt von ca. 20 Gew.-%. Der Wassergehalt wird gegebenenfalls durch Wiederbefeuchten eingestellt. Auf ihren beiden Oberflächen befinden sich jeweils 20 mg/m$^2$ des durch die Erhitzung gehärteten Harzes. Die Wasserdampfdurchlässigkeit der erhaltenen Cellulosebahn beträgt ca. 700 g/m$^2$. 24 h (DIN 53 122, gravimetrisch ermittelt), der Quellwert nach 24 h bei Raumtemperatur etwa 160%. Der Quellwert ist die Menge an Wasser, in Gewichtsprozent bezogen auf die Cellulosebahn, die vom Bahnmaterial aufgenommen werden kann. Der Quellwert wird nach einer Vorschrift ermittelt, die in «Färberei und textiltechnische Untersuchungen», (Seite 400), H. Agster, Springer-Verlag, Berlin 1956, beschrieben ist. Das Bahnmaterial zeigt ferner eine Reissfestigkeit von 48 bis 53 N/mm$^2$ in Querrichtung.

Die Cellulosebahn wird in 60 mm breite Bänder geschnitten. Jeder bandförmige Zuschnitt wird mit einer Vorrichtung, wie in Fig. 8 der EP-A-0 037 543 gezeigt, entlang eines seiner beiden Ränder mit einer 12 gew.-%igen wässrigen Lösung (pH 7,5, eingestellt mit konz. Ammoniaklösung) des oben genannten wasserlöslichen kationischen Harzes streifenförmig in Bandlängsrichtung beschichtet und, wie dort ebenfalls gezeigt, zu einem Schlauch geformt.

Hierzu wird die Lösung mittels einer rotierenden, ca. 2 mm breiten Antragswalze aus einer Vorratswanne auf das laufende Folienband übertragen und nimmt dort bei einer Nassschichtdicke von 10 bis 12 μm eine Breite von 2 bis 3 mm ein. Das in Randnähe beschichtete Band wird mit Hilfe äusserlich und innerlich angreifender Formhilfen derart zu einem Schlauch mit einem Durchmesser von 17 mm geformt, dass die mit der Lösung beschichtete Kante und die unbeschichtete Kante sich um ca. 5 mm überlappen. Die jeweiligen kantennahen Bereiche bilden eine in Längsrichtung verlaufende, überlappte Klebenaht (vgl. Fig. 1 der EP-A-0 037 543), wobei eine Klebstoffschicht entsprechend einem Flächengewicht von 1 bis 2 g/m$^2$ resultiert. Der gebildete Schlauch wird ca. 1 bis 2 sec nach Bildung der Überlappungsnaht flachgelegt, zwischen zwei Zugwalzenpaaren aufgeblasen, vom zweiten Zugwalzenpaar verdrillt und flachgelegt und danach aufgerollt. Die Geschwindigkeit der Schlauchfortbewegung beträgt 50 m/min, die Drehzahl ist 60 Umdrehungen/min.

Nach ca. 3-tägiger Lagerung bei Raumtemperatur besitzt die Klebestelle eine Heisswasserbeständigkeit von mehreren Stunden, wenn quer zur Naht geschnittene Prüflinge von 15 mm Breite und 50 mm Einspannlänge in 80 °C heisses Wasser hängend eingetaucht und am unteren Ende mit 300 g belastet werden.

Im Normklima (23 °C, 50% rel. Feuchte) konditionierte Schlauchhüllen zeigen eine Reissfestigkeit in Querrichtung von 50 N/mm$^2$ und einen Platzdruck von mehr als 1 bar; für 30 min in Wasser (40 °C) eingelegte Schläuche weisen einen Platzdruck von 0,35 bis 0,45 bar auf. Diese Werte sind für kleinkalibrige Wursthüllen ausreichend.

Die so hergestellten und verdrillt aufgewickelten Schlauchhüllen werden von der Rolle abgewickelt und mit der aus der US-A-4 185 358 bekannten Vorrichtung im Raffverhältnis 1:50 gerafft. Die erhaltene Raupe zeigt eine spiralig verlagerte Naht mit einem Wendelabstand von 1,7 cm.

Der Wendelabstand (cm) ergibt sich aus der Beziehung

$$\frac{\text{Schlauchgeschwindigkeit beim Aufwickeln (m/min)} \times 100}{\text{Drehzahl (Umdrehungen/min)} \times \text{Raffdichte}}$$

Die Raffdichte ist der Quotient aus Schlauchlänge/Raupenlänge und liegt bei üblichen Werten, d.h. zwischen 20 und 120.

Der Hohlkanal der Raupe ist gerade und besitzt eine glatte Innenwandung. Die Raupe lässt sich ohne Probleme auf das Füllrohr einer Stopfvorrichtung aufschieben und wird beim Einpressen der Wurstmasse gleichmässig gefüllt. Hierzu wird eine typische Wurstmasse verwendet, z.B. nach Wiener oder Frankfurter Art. Die erhaltenen Würste werden unter bekannten Bedingungen geräuchert und bei 70 bis 85 °C gebrüht. Man erhält Brühwürstchen, die eine gleichmässige typische rotbraune Räucherfarbe aufweisen; die Klebenaht hält den bei der Verarbeitung auftretenden Kräften stand.

Bei Bedarf kann die Schlauchhülle vom Wurstgut abgezogen werden; es verbleiben hüllenlose Würstchen in gut ausgebildeter Eigenhaut.

Beispiel 2

Man wiederholt Beispiel 1, verwendet aber als Klebstoff für die Klebenaht eine 12 gew.-%ige wässrige Lösung (pH 9) eines kationischen Polyamidharzes der Fa. Hercules mit der Bezeichnung ® Kymene 557 H. Die Lösung wird aus einem unter Druck stehenden Vorratsgefäss durch einen dünnen Schlauch zu einer Beschichtungsdüse gefördert, deren Öffnung einen Durchmesser von ca. 0,4 mm besitzt und die im Bereich des Formkopfes so positioniert ist, dass die Klebstofflösung unmittelbar in den Überlappungsbereich des zum Schlauch gelegten Cellulosebandes entlassen wird. Durch Wahl eines geeigneten Druckes lässt sich eine ca. 2 bis 3 mm breite Spur der Klebstofflösung im Überlappungsbereich kontinuierlich erzeugen, mit der die Kantenbereiche des Bandes überlappend verbunden werden. Der erhaltene Schlauch wird sofort flachgelegt, verdrillt und im verdrillten Zustand aufgerollt. Die Schlauchfortbewegung erfolgt mit einer Geschwindigkeit von 70 m/min, die Verdrillung wird mit einer Drehzahl von 150 Umdrehungen/min durchgeführt.

Nach 2 bis 3 Tagen Lagerung bei Raumtemperatur hat sich eine Heisswasserbeständigkeit von mehreren Stunden entwickelt, wenn quer zur Naht geschnittene Prüflinge von 15 mm Breite und 50 mm Einspannlänge in 80 °C heisses Wasser hängend eingetaucht und am unteren Ende mit 300 g belastet werden. Zur Herstellung der gerafften Wursthülle wird die verdrillt aufgewickelte Hülle vom Wickel abgerollt und der aus der US-A-4 185 358 bekannten Raffvorrichtung zugeführt. Das Raffen erfolgt mit einem Raffverhältnis von 1:100. Die Raupe zeigt einen Wendelabstand von 0,5 cm, ihr Hohlkanal hat gerade Form, gleichmässigen Querschnitt und glatte Innenwandung, wodurch die Raupe problemlos auf das Füllrohr aufgeschoben werden kann. Die so hergestellten gerafften Schlauchhüllen eignen sich vorzüglich als rauchdurchlässige und reissfeste künstliche Wursthäute, insbesondere für Wurstbrät der im Beispiel 1 genannten Art.

Beispiel 3

Viskose wird durch einen Spalt in ein saures Koagulationsbad gepresst und die nach Regenerieren und Waschen erhaltene Bahn aus Cellulosehydrat-Gel durch ein Weichmacherbad geführt, das aus einer 9 gew.-%igen wässrigen Glycerinlösung besteht. Nach dem Trocknen bei 85 bis 90 °C zeigt die Bahn aus regenerierter Cellulose ein Flächengewicht von 40 g/m$^2$, einen Wassergehalt von ca. 8 Gew.-% und einen Glyceringehalt von ca. 20 Gew.-%. Der Quellwert beträgt etwa 153%, die Reissfestigkeit des Bahnmaterials liegt bei 96 N/mm$^2$ in Längsrichtung und bei 68 N/mm$^2$ in Querrichtung.

Die Cellulosebahn wird in 58 mm breite Bänder geschnitten. Jeder bahnförmige Zuschnitt wird entlang eines seiner beiden Ränder mit einer mittels konzentrierter wässriger Ammoniaklösung auf pH 7.5 gestellten Kleberlösung streifenförmig beschichtet. Die Kleberlösung besteht aus 94 Gewichtsteilen einer 12%igen wässrigen Lösung des wasserlöslichen kationischen Harzes von Beispiel 1, 5 Gew.-Teilen Glycerin und 1 Gew.-Teil eines roten Pigmentfarbteiges (®Novofil BB 02, Hersteller Hoechst). Sie wird, wie in Beispiel 2 beschrieben, mittels Druck durch eine Beschichtungsdüse in den Überlappungsbereich des zum Schlauch geformten Cellulosebandes gefördert und verbindet die kantennahen Bereiche des Bandes miteinander.

Der flachgelegte verklebte Schlauch vom Kaliber 17 mm wird mit einer Geschwindigkeit von 100 m/min unmittelbar von der Klebestation zu einem geschlossenen Zugwalzenpaar gefördert, hinter dem er, mit Stützluft zu runder Form aufgeblasen, bis zu einem zweiten geschlossenen Zugwalzenpaar geführt wird. Das zweite Zugwalzenpaar rotiert mit einer Drehzahl von 100 Umdrehungen/min um die Schlauchachse, verdrillt dabei den Schlauch und legt ihn flach. Der verdrillte und flachgelegte Schlauch wird einer gleichfalls rotierenden Wickelvorrichtung zugeführt.

Der so gebildete Schlauchwickel wird in die Abrollvorrichtung einer Raffmaschine eingelegt und der ablaufende verdrillte Schlauch gerafft. Man erhält steife und gerade Raupen, die bei einem Raffverhältnis von 1:80 einen Wendelabstand der Naht von 1,25 cm aufweisen.

Sie werden in herkömmlicher Weise mit typischem Wurstbrät gefüllt, portioniert und unter üblichen Bedingungen geräuchert, gebrüht und zu Brühwürstchen aufgearbeitet. Bei Bedarf kann die Schlauchhülle vom Wurstbrät abgezogen werden.

Beispiel 4

Eine Bahn aus langfaserigem Hanfpapier mit einer Flachbreite von 235 mm und einem Flächengewicht von 21 g/m$^2$ wird beidseitig mit Viskose beschichtet. Die Spaltbreite beträgt beispielsweise 0,8 mm, die Bahngeschwindigkeit 5 m/min.

Auf die mit Viskose versehene Bahn wird danach eine zur Fällung und Regenerierung geeignete Flüssigkeit aufgebracht. Die Bahnbreite wird durch an den beiden Bahnkanten angreifende Halteelemente konstant gehalten, so dass die gewöhnlich beim Regenerieren auftretende Schrumpfung in Querrichtung verhindert wird. Die faserverstärkte Bahn aus Cellulosehydrat-Gel durchläuft anschliessend Wasch- und Entschwefelungsbäder. Die Bahn aus Cellulosehydrat-Gel hat nun eine Breite von 210 mm.

Die faserverstärkte Bahn aus Cellulosehydrat-Gel wird durch eine Wanne gezogen, die eine 3 gew.-%ige wässrige Lösung des in Beispiel 1 verwendeten Harzes enthält. Danach passiert die Bahn ein Bad mit 15 gew.-%iger wässriger Glycerinlösung.

Es folgt eine Vortrocknung der Bahn, bei der der Wassergehalt der Bahn auf 80 bis 150 Gew.-% erniedrigt wird. Danach werden die Bahnkanten von Halteelementen erfasst, wobei die Bahn auf eine Breite von 252 bis 262 mm in Querrichtung verdehnt wird. Die Bahn wird – während sie weiterhin auf diese Breite gehalten wird – getrocknet, vorzugsweise bei etwa 80 bis 110 °C. Die Restfeuchte der aufgewickelten Bahn beträgt etwa 14 Gew.-%, sie zeigt eine Reissfestigkeit in Längsrichtung von 52 N/mm$^2$, in Querrichtung 58 N/mm$^2$ und eine Reissdehnung von etwa 17,5% in beiden Richtungen. Ihr Flächengewicht ist etwa 100 g/m$^2$, ihr Glyceringehalt etwa 21%. Auf beiden Oberflächen sind Schichten aus dem gehärteten, wasserunlöslichen Harz mit jeweils einem Flächengewicht von etwa 0,5 bis 1 g/m$^2$ vorhanden. Die Wasserdampfdurchlässigkeit beträgt 650 g/m$^2$.24 h.

Die maximale Aufnahme von flüssigem Wasser bei Raumtemperatur nach 24 h (Quellwert) beträgt 140%.

Die Bahn aus faserverstärkter Regeneratcellulose wird in 170 mm breite Bänder geschnitten. Ein solches Band wird durch eine Formvorrichtung geführt, wobei ein Schlauch mit einem Durchmesser von 50 mm entsteht und die beiden Ränder des Bandes sich um 13 mm überlappen. In diese Überlappung ragt die Spitze einer feinen Düse, durch die mittels Druck eine 12%ige wässrige Lösung des in Beispiel 1 genannten Harzes, die mit konz. Ammoniak auf einen pH-Wert von 7,5 eingestellt wurde, gespritzt wird. Die nun im Überlappungsbereich vorhandene ca. 10 mm breite Schicht der Klebstofflösung mit einer Nassschichtdicke von ca. 10 µm verbindet die randnahen Bereiche des Bandes miteinander. Der kontinuierlich gebildete und mit einer in Längsrichtung verlaufenden Klebenaht versehene Schlauch wird sofort flachgelegt, verdrillt und im verdrillten Zustand aufgerollt, ohne dass die sich überlappenden Randzonen verrutschen. Die Geschwindigkeit der Schlauchfortbewegung beträgt 40 m/min, die Verdrillung erfolgt mit 40 Umdrehungen/min.

Nach 2-tägiger Lagerung im Normalklima besitzt die Klebenaht eine Heisswasserfestigkeit von mehr als einer Stunde, wenn quer zur Naht geschnittene Probestreifen von 50 mm Einspannlänge und 15 mm Breite in 80 °C heisses Wasser senkrecht eingehängt und mit einem Gewicht von 2000 g belastet werden. Nach 30 minütiger Wässerung im Wasserbad zeigt der Schlauch einen Platzdruck von 1,2 bar.

Quer zur Naht geschnittene, klimatisierte Proben zeigen im Zugversuch eine Reissfestigkeit von 57 bis 58 N/mm$^2$ in Querrichtung, erreichen also auch im Bereich der Naht die ursprüngliche Materialfestigkeit.

Die erhaltenen und verdrillt aufgewickelten Schläuche werden unter Abwickeln mit der aus der US-A-4 185 358 bekannten Raffvorrichtung im Raffverhältnis 1:50 gerafft. Die erhaltene Raupe hat einen Wendelabstand von 2 cm. Sie zeigt trotz der relativ dicken Klebenaht eine verhältnismässig hohe Verdichtung und gleichzeitig eine glatte Innenwandung und gleichmässigen Querschnitt im Hohlkanal. Sie ist steif und bruchfest und lässt sich folglich sicher hantieren, insbesondere beim Transport und beim Füllvorgang.

Der nach diesem Beispiel hergestellte geraffte Schlauch wird auf einer üblichen Wurstabfüllvorrichtung mit einem Wurstbrät für Brühwürste (z.B. Lyoner oder Jagdwurst) gefüllt und abschnittsweise durch Abbinden oder Klippen verschlossen. Danach werden die erhaltenen Würste wie üblich geräuchert, z.B. 20 Minuten im Feuchtrauch bei 70 bis 80°C, und für weitere 50 Minuten in Wasser von 80 bis 82°C gebrüht, danach gekühlt und im Kühlraum gelagert. Im Falle von Salamifüllungen werden die Würste geräuchert und getrocknet.

Nach dem Anschneiden können die Wursthüllen mühelos abgezogen werden. Ferner zeigen die Würste auch im Nahtbereich eine gleichmässige Räucherfärbung. Die Klebenaht ist stabil gegenüber den mechanischen und thermischen Belastungen während der Verarbeitung und Lagerung.

Die Erfindung wird durch die Fig. 1 bis 4 näher erläutert. Es zeigt:

Fig. 1a und 1b ausschnittsweise zwei Beispiele für die geraffte Wursthülle,

Fig. 2 ein Verfahren zur Herstellung eines Schlauches aus einer Bahn und Aufrollen des verdrillten Schlauches,

Fig. 3 in perspektivischer Ansicht die Wickelrolle der Fig. 4,

Fig. 4 die Herstellung eines gerafften Schlauches unter Abrollen eines verdrillt aufgewickelten Schlauches.

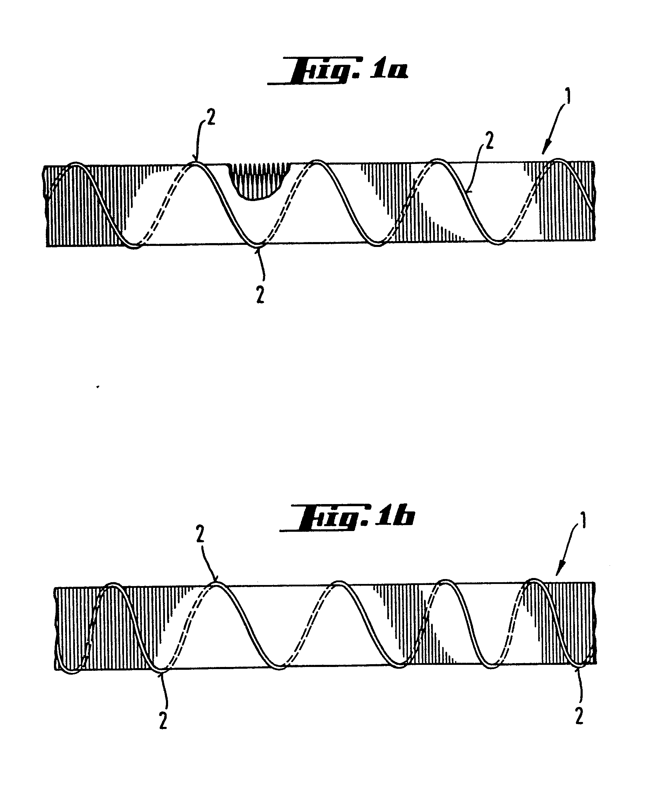

In Fig. 1a und 1b zeigt die geraffte Schlauchhülle 1 eine gewendelte Nahtzone 2, die im Beispiel der Fig. 1a eine gleichmässige Steigung, im Beispiel der Fig. 1b verschiedene Steigungen aufweist. Die in der Fig. 1b dargestellte Raupe wird hergestellt aus einem Schlauch, der beim Aufwickeln mit verschiedenen Drehgeschwindigkeiten verdrillt wurde.

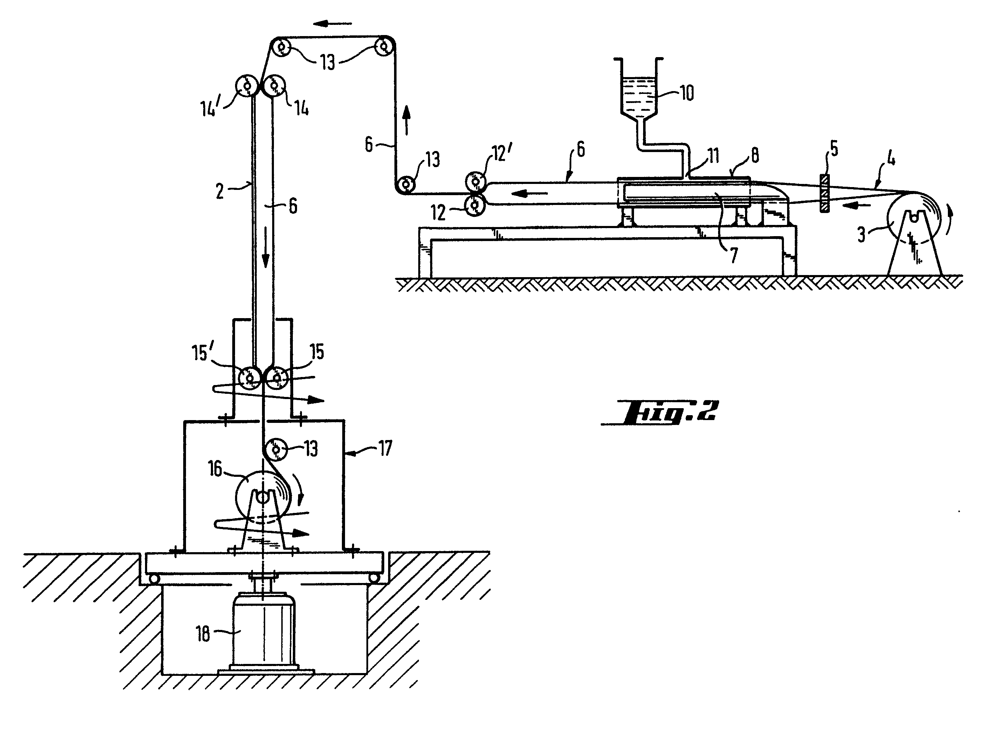

In Fig. 2 wird die Bahn 4 aus Cellulose, die eine beidseitige Beschichtung eines Verankerungsmittels aufweist, von einer Rolle 3 abgewickelt, durch eine Formschablone 5 geführt und mit dem Stützrohr 7 und der Hülse 8 zu einem Schlauch 6 geformt, wobei sich die beiden Ränder in der Formschablone 5 nähern. Das Stützrohr 7 und die Hülse 8 dienen zur Unterstützung der Schlauchbildung, wobei der Schlauch von Innen und Aussen abgestützt wird.

Die Auftragseinrichtung erzeugt mit einer Düse 11 einen streifenförmigen Auftrag der Klebstofflösung 10 zwischen den sich überlappenden Randzonen der Bahn 4. Nach Durchlaufen der Zugwalzen 12, 12' und Umlenkwalzen 13 wird der Schlauch zwischen zwei Quetschwalzenpaaren 14, 14' und 15, 15' aufgeblasen und mit der Rolle 16 aufgewickelt. Das Quetschwalzenpaar 15, 15' und die Rolle 16 befinden sich auf einem gemeinsamen Gestell 17, welches mit dem Antriebsmotor 18 gedreht wird, wodurch die Schlauchnaht 2 in verdrillter Form auf der Rolle 16 aufgewickelt wird.

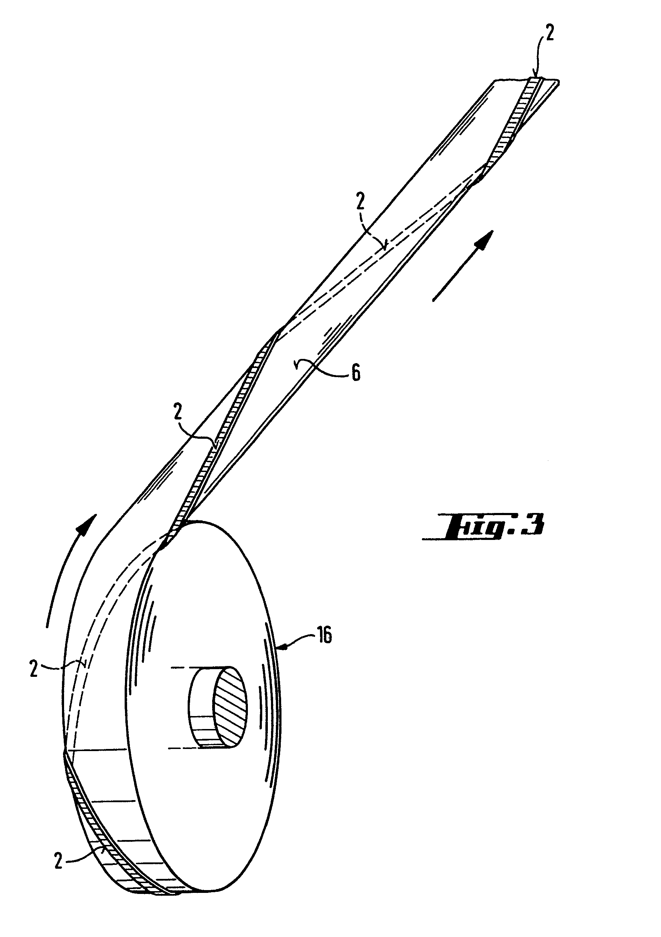

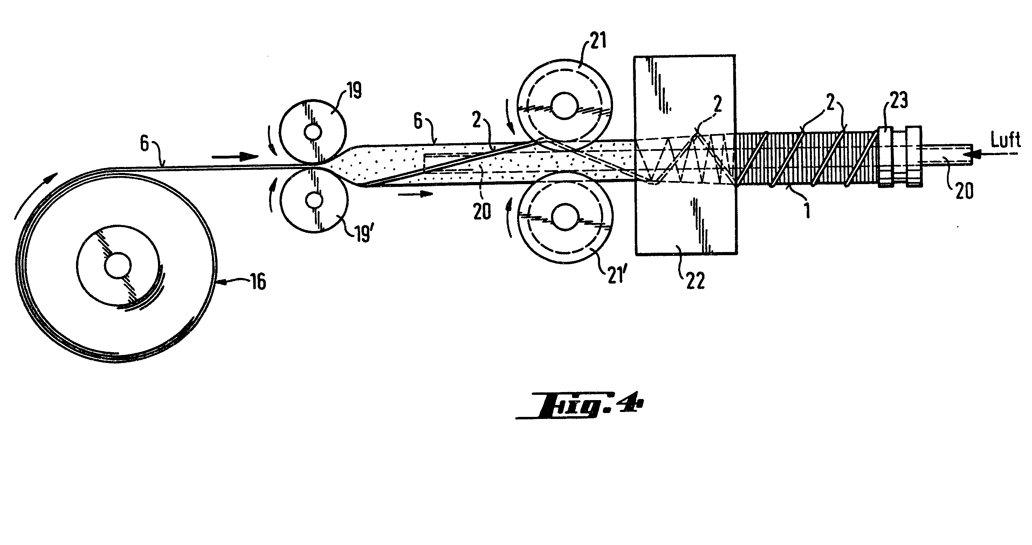

In Fig. 3 und 4 haben die Bezugsziffern die gleiche Bedeutung wie in den vorhergehenden Figuren. In der Fig. 4 wird der verdrillt aufgewickelte Schlauch 6 von der Rolle 16 abgewickelt und nach Durchlaufen der Quetschwalzen 19, 19' in aufgeblasenem Zustand gehalten, wobei durch den Raffdorn 20 in bekannter Weise Luft eingeblasen wird. Der aufgeblähte Schlauch 6 bewegt sich durch zwei weitere angetriebene Rollen 21, 21' in Richtung auf die Einrichtung 22, wo der eigentliche Raffvorgang stattfindet. Mit 23 ist ein Widerlager bezeichnet, gegen das der Schlauch zur Raupe 1 zusammengepresst wird.

## Patentansprüche

1. Aus einer kreiszylindrischen Hülle (6) geraffte Wursthülle (1) in Form eines Hohlzylinders mit einem inneren Hohlkanal, wobei die Hülle aus einem blatt- oder bahnförmigen Folienzuschnitt oder endloser Folienbahn (4) besteht, der bzw. die um die Längsachse gebogen ist und dessen bzw. deren längsaxial sich erstreckenden Randbereiche mit einer gegebenenfalls rauchdurchlässigen Klebenaht (2) verbunden sind, wobei die Klebenaht (2) die ausser der Klebstoffschicht gegebenenfalls ein Verankerungsmittel für die Klebstoffschicht enthält, spiralförmig um die Längsachse der gerafften Wursthülle (1) angeordnet ist, dadurch gekennzeichnet, dass die Anzahl der spiralförmigen Windungen der Klebenaht (2) pro 10 m Hüllenlänge grösser als 10 ist.

2. Wursthülle nach Anspruch 1, dadurch gekennzeichnet, dass die Anzahl der Windungen der Klebenaht pro 10 m Hüllenlänge bis zu 40, insbesondere 15 bis 30, beträgt.

3. Wursthülle nach Anspruch 1 oder 2, dadurch gekennzeichnet, dass sie aus Cellulose besteht und gegebenenfalls faserverstärkt ist.

4. Wursthülle nach einem der Ansprüche 1 bis 3, dadurch gekennzeichnet, dass der Querschnitt ihres Hohlkanals kreisförmig ist und die spiralförmig sich erstreckende Klebenaht eine auf der Raupenaussenseite spiralförmig sich erstreckende Verdickung bildet.

5. Wursthülle nach einem der Ansprüche 1 bis 4, dadurch gekennzeichnet, dass der Bereich der Klebenaht einen Farbstoff enthält.

6. Wursthülle nach einem der Ansprüche 1 bis 5, dadurch gekennzeichnet, dass die Klebenaht aus überlappten Rändern besteht, die im Überlappungsbereich mit einer Klebstoffschicht und/oder mit Folienstreifen miteinander verklebt sind, wobei der oder die Folienstreifen vorzugsweise aus dem gleichen Material wie die Hülle besteht bzw. bestehen.

7. Wursthülle nach einem der Ansprüche 1 bis 5, dadurch gekennzeichnet, dass die Klebenaht aus aneinander stossenden Rändern besteht, welche mit beide Ränder überdeckenden Folienstreifen auf der Aussenseite und/oder Innenseite der Hülle verbunden sind.

8. Wursthülle nach einem der Ansprüche 1 bis 7, dadurch gekennzeichnet, dass die Steigung der spiralförmigen Windungen der Klebenaht auf der gerafften Wursthülle gleichförmig ist.

9. Verfahren zur Herstellung einer gerafften Wursthülle (1) aus einer kreiszylindrischen Hülle (6) mit einer Klebenaht (2), wobei man eine aufgewickelte kreiszylindrische Hülle (6) mit einer Klebenaht (2), hergestellt aus einem blatt- oder bahnförmigen Zuschnitt oder einer endlosen Bahn (4), die um die Längsachse gebogen und zu einem Schlauch geformt ist, wobei die beiden längsaxial sich erstreckenden Randbereiche überlappend und gegebenenfalls mit wenigstens einem Folienstreifen oder auf Stoss angeordnet mit wenigstens einem beide Randbereiche überlappenden Folienstreifen verklebt sind, unter Abwickeln einem Raffdorn (20) zuführt, sie auf den Raffdorn (20) unter einem inneren Gasdruck aufschiebt und sie gegen eine Gegenkraft (23) unter Faltenbildung rafft, dadurch gekennzeichnet, dass man die Hülle (6) in verdrilltem Zustand aufwickelt und vom Wikkel in verdrilltem Zustand dem Raffdorn (20) zuführt, in verdrilltem Zustand auf den Raffdorn (20) aufschiebt und in verdrilltem Zustand rafft.

10. Verfahren nach Anspruch 9, dadurch gekennzeichnet, dass man die Hülle (6) kontinuierlich bei ihrer Herstellung in verdrilltem Zustand aufwickelt.

11. Verfahren nach Anspruch 9 oder 10, dadurch gekennzeichnet, dass man die in Längsrichtung fortbewegte Hülle (6) mit Klebenaht (2) mit einer um die Hüllenlängsachse rotierenden Einheit (15, 16, 17) verdrillt, gegebenenfalls flachlegt, die verdrillte Hülle aufwickelt und die aufgewickelte verdrillte Hülle (6) im verdrillten Zustand abwickelt und dem Raffdorn (20) zuführt.

12. Verfahren nach Anspruch 11, dadurch gekennzeichnet, dass man die Hülle (6) in aufgeblasenem Zustand einem um die Hüllenlängsachse rotierenden Zugwalzenpaar (15, 15') zuführt, welches die Hülle (6) verdrillt und flachlegt, und die verdrillte flachgelegte Hülle (6) auf einer Rolle (16) aufwickelt, welche mit der gleichen Geschwindigkeit um die Hüllenlängsachse oder um eine Achse parallel zur Hüllenlängsachse rotiert wie das Zugwalzenpaar (15, 15').

13. Verfahren nach einem der Ansprüche 9 bis 12, dadurch gekennzeichnet, dass die Hülle (6) während des Raffens eine weitere Verdrillung erhält, wobei die Hülle (6) während des Raffens gedreht wird, indem der Raffdorn (20) während des Raffens um seine Achse gedreht wird oder die Hülle durch von aussen angreifende Rollen (21, 21') oder Rafforgane (22) während des Raffens um ihre Achse gedreht wird.

14. Verfahren nach einem der Ansprüche 9 bis 13, dadurch gekennzeichnet, dass man die Hülle (6) mit einer Drehzahl (Umdrehungen/min) verdrillt und mit einer Geschwindigkeit (m/min) aufwickelt, dass der Quotient (Umdrehungen/m) aus Drehzahl und Geschwindigkeit grösser als 1, vorzugsweise maximal 4 ist.

15. Verfahren nach Anspruch 14, dadurch gekennzeichnet, dass man die Hülle (6) mit einer Drehzahl von 5 bis 200 Umdrehungen/min verdrillt und mit einer Geschwindigkeit von 5 bis 200 m/min aufwickelt.

**Claims**

1. Shirred sausage casing (1) which has the shape of a hollow cylinder possessing an internal hollow space and is obtained from a circular cylindrical casing (6), said casing being comprised of a sheet-like or web-like cut piece of film or of an endless web of film (4) which is bent about its longitudinal axis and the edge regions of which, extending in the direction of the longitudinal axis, are jointed by a glued seam (2) which, if appropriate, is smoke-permeable, said glued seam (2), which, if appropriate, in addition to the adhesive layer contains an anchoring agent for the adhesive layer, extending in a helically twisted manner about the longitudinal axis of the shirred sausage casing (1), characterized in that the number of helical turns of the glued seam (2) per 10 m tube lenght exceeds 10.

2. Sausage casing as claimed in Claim 1, characterized in that the number of turns described by the glued seam per 10 m tube lenght is up to 40, in particular between 15 and 30.

3. Sausage casing as claimed in Claim 1 or 2, characterized in that it is comprised of cellulose and, if appropriate, is fiber-reinforced.

4. Sausage casing as claimed in any of Claims 1 to 3, characterized in that its internal hollow space has a circular cross-section and that the helically twisted glued seam forms a helically extending thickened zone on the outside of the concertina.

5. Sausage casing as claimed in any of Claims 1 to 4, characterized in that a dyestuff is contained in the area of the glued seam.

6. Sausage casing as claimed in any of Claims 1 to 5, characterized in that the glued seam comprises overlapped edges which in the region of the overlap are bonded to one another by an adhesive layer and/or a film strip or film strips, the film strip(s) preferably being made of the same material as the casing.

7. Sausage casing as claimed in any of Claims 1 to 5, characterized in that the glued seam is comprised of abutting edges which are joined by film strips which cover both edges and are applied to the outside and/or inside of the casing.

8. Sausage casing as claimed in any of Claims 1 to 7, characterized in that the helical turns of the glued seam on the shirred sausage casing have a uniform lead.

9. Process for the production of a shirred sausage casing (1) from a circular-cylindrical casing (6) with a glued seam (2), in which process a wound-up circular-cylindrical casing (6) with a glued seam (2), which is produced from a sheet-like or web-like cut piece of film or from an endless web of film (4) bent about its longitudinal axis and shaped into a tube, whereby the overlapped edge regions extending in the direction of the longitudinal axis are mutually bonded, if appropriate with the aid of at least one strip of film or whereby the abutting edge regions are jointed by means of at least one film strip covering both edge regions, is passed to a shirring mandrel (20) while it is simultaneously being unwound, is pushed onto the shirring mandrel (20) while applying an internal gas pressure and is shirred by pressing it against a stop (23), whereby folds form, said process being characterized in that the casing (6) is wound up in a helically twisted state, is conveyed to the shirring mandrel in the helically twisted state, is pushed onto the shirred mandrel (20) in the helically twisted state and is shirred in the helically twisted state.

10. Process as claimed in Claim 9, characterized in that the casing (6) is continuously wound up in a helically twisted manner when being produced.

11. Process as claimed in Claim 9 or 10, characterized in that the casing (6) with a glued seam (2) which is being conveyed in the longitudinal direction, is helically twisted by a unit (15, 16, 17), optionally laid flat, and wound-up and in that the helically twisted, wound-up casing (6) is unwound in the helically twisted state and conveyed to the shirring mandrel (20).

12. Process as claimed in Claim 11, characterized in that the casing (6) is conveyed in the inflated state to a pair of draw rollers (15, 15') which rotate about the longitudinal axis of the casing (6) and by which the casing (6) is helically twisted and laid flat, and in that the helically twisted, laid-flat casing (6) is wound up on a roll (16) which, at the same speed as the pair of draw rollers (15, 15') rotates about the longitudinal axis of the casing (6) or about an axis parallel to the longitudinal axis of the casing (6).

13. Process as claimed in any of Claims 9 to 12, characterized in that the casing (6) is imparted a further twist during shirring, whereby the casing (6) is rotated during shirring, either by rotating the shirring mandrel (20) during shirring about its axis, or by rotating the casing (6) during shirring about its axis, by means of rollers (21, 21') or shirring elements (22) engaging the outside of the casing.

14. Process as claimed in any of Claims 9 to 13, characterized in that the speed of rotation (rpm), at which the casing (6) is helically twisted and the speed at which the casing (6) is advanced (m/min) are chosen such that the quotient (revolutions per m) of speed of rotation and advance speed is greater than 1 and preferably does not exceed 4.

15. Process as claimed in Claim 14, characterized in that the casing (6) is helically twisted at a speed of 5 to 200 rpm and wound up at a speed of 5 to 200 m/min.

## Revendications

1. Enveloppe pour saucisses plissée (1), constituée d'une enveloppe cylindrique circulaire (6), sous forme d'un cylindre creux comportant un canal interne creux, l'enveloppe étant constituée d'une pièce pelliculaire en forme de feuille ou de bande ou d'une bande continue (4) qui est courbée autour de l'axe longitudinal et dont les zones des bords s'étendant le long de l'axe longitudinal sont assemblées par un joint collé (2) éventuellement perméable à la fumée, le joint collé (2) qui contient, en plus de la couche d'adhésif, éventuellement un agent d'accrochage pour la couche d'adhésif, étant disposé en hélice autour de l'axe longitudinal de l'enveloppe pour saucisses plissée (1), caractérisée en ce que le nombre des spires de torsion du joint collé (2) est supérieur à 10 pour 10 m de longueur de l'enveloppe.

2. Enveloppe pour saucisses selon la revendication 1, caractérisée en ce que le nombre des spires du joint collé va jusqu'à 40, en particulier de 15 à 30, pour 10 m de longueur de l'enveloppe.

3. Enveloppe pour saucisses selon la revendication 1 ou 2, caractérisée en ce qu'elle est constituée de cellulose et, éventuellement, est renforcée à la fibre.

4. Enveloppe pour saucisses selon l'une des revendications 1 à 3, caractérisée en ce que la section transversale de son canal creux est circulaire et le joint collé s'étendant en hélice forme sur le côté externe de la chenille un épaississement s'étendant en hélice.

5. Enveloppe pour saucisses selon l'une des revendications 1 à 4, caractérisée en ce que la zone du joint de collage contient un colorant.

6. Enveloppe pour saucisses selon l'une des revendications 1 à 5, caractérisée en ce que le joint collé est constitué de bords superposés qui sont collés l'un à l'autre dans la zone de chevauchement au moyen d'une couche d'adhésif et/ou au moyen de rubans, le ou les rubans étant constitué(s) de préférence du même matériau que l'enveloppe.

7. Enveloppe pour saucisses selon l'une des revendications 1 à 5, caractérisée en ce que le joint collé est constitué de bords contigus qui sont assemblés par des rubans recouvrant les deux bords sur le côté externe et/ou le côté interne de l'enveloppe.

8. Enveloppe pour saucisses selon l'une des revendications 1 à 7, caractérisée en ce que le pas des spires du joint collé est régulier sur l'enveloppe pour saucisses plissée.

9. Procédé pour la fabrication d'une enveloppe pour saucisses plissée (1) à partir d'une enveloppe cylindrique circulaire (6) comportant un joint collé (2), dans lequel on envoie sur un mandrin de plissage (20), par déroulement, une enveloppe cylindrique circulaire enroulée (6) comportant un joint collé (2), obtenue à partir d'une pièce en forme de feuille ou de bande ou à partir d'une bande continue (4), qui est courbée autour de l'axe longitudinal et formée en un boyau, les deux zones des bords s'étendant le long de l'axe longitudinal étant collées par superposition et éventuellement au moyen d'au moins un ruban ou, disposées bout à bout, au moyen d'au moins un ruban recouvrant les deux zones des bords, on la pousse sur le mandrin de plissage (20) avec application d'une pression interne de gaz, et on la plisse contre une force opposée (23) avec formation de plis, caractérisé en ce que l'on enroule l'enveloppe (6) à l'état torsadé et, à partir du rouleau, on l'envoie à l'état torsadé vers le mandrin de plissage (20), on la pousse à l'état torsadé sur le mandrin de plissage (20) et on la plisse à l'état torsadé.

10. Procédé selon la revendication 9, caractérisé en ce que l'on enroule en continu l'enveloppe (6) à l'état torsadé lors de sa fabrication.

11. Procédé selon la revendication 9 ou 10, caractérisé en ce que l'on torsade au moyen d'une unité (15, 16, 17) tournant autour de l'axe longitudinal de l'enveloppe, l'enveloppe (6) progressant dans le sens longitudinal, comportant le joint collé (2), éventuellement on la met à plat, on enroule l'enveloppe torsadée, puis on déroule et envoie au mandrin de plissage (20), à l'état torsadé, l'enveloppe enroulée et torsadée (6).

12. Procédé selon la revendication 11, caractérisé en ce que l'on envoie l'enveloppe (6), à l'état soufflé, à une paire de rouleaux de traction (15, 15') tournant autour de l'axe longitudinal de l'enveloppe, laquelle torsade l'enveloppe (6) et la met à plat, et on enroule l'enveloppe (6), torsadée et mise à plat, sur un rouleau (16) qui tourne à la même vitesse que la paire de rouleaux de traction (15, 15') autour de l'axe longitudinal de l'enveloppe ou autour d'un axe parallèle à l'axe longitudinal de l'enveloppe.

13. Procédé selon l'une des revendications 9 à 12, caractérisé en ce que l'enveloppe (6) acquiert pendant le plissage une autre torsion, l'enveloppe (6) étant soumise à une rotation pendant le plissage par le fait que pendant le plissage on fait tourner le mandrin de plissage (20) autour de son axe, ou que l'on fait tourner l'enveloppe autour de son axe pendant le plissage, au moyen de rouleaux (21, 21') ou d'organes de plissage (22) agissant de l'extérieur.

14. Procédé selon l'une des revendications 9 à 13, caractérisé en ce que l'on torsade l'enveloppe (6) à une vitesse de rotation (tours/min) et on l'enroule à une vitesse (m/min), de manière que le quotient (tours/m) de la vitesse de rotation et de la vitesse de déplacement est supérieur à 1, de préférence égal à 4 au maximum.

15. Procédé selon la revendication 14, caractérisé en ce que l'on torsade l'enveloppe (6) à une vitesse de rotation de 5 à 200 tours/min, et on l'enroule à une vitesse de déplacement de 5 à 200 m/min.

## Fig. 1a

## Fig. 1b

**Fig.2**

Fig.3

Fig. 4